# EUROPEAN PATENT SPECIFICATION

(11) **EP 0 594 361 B1**
(45) Date of publication and mention of the grant of the patent: **02.01.1997**
(21) Application number: 93308207.5
(22) Date of filing: 14.10.1993
(51) Int. Cl.: F16L 47/00, F16L 47/02

(54) **Branch pipe connection**
Abzweigrohrverbindung
Raccord d'un tuyau de branchement

(30) Priority: 17.10.1992 GB 9221844
(43) Date of publication of application: 27.04.1994
(73) Proprietor: UPONOR LIMITED, Blackwell, Nr. Alfreton, Derbyshire DE55 5JD (GB)
(72) Inventor: Lees, George Albert, Keyworth, Nottingham NG12 5HP (GB); Godfrey, Stuart Nigel, South Normanton, Derbyshire DE55 3PA (GB)
(74) Representative: Vinsome, Rex Martin

(56) References cited:
- EP-A- 0 170 844
- EP-A- 0 300 795
- DE-A- 3 148 332
- DE-C- 924 912
- FR-A- 2 122 939

## Description

This invention relates to a method of making a branch pipe connection and more particularly to a method of connecting a tee piece to a distribution main.

Over the past few years there has been an increasing tendency to replace the traditional cast iron gas mains with distribution mains formed from plastics materials such as high density polyethylene. The need has accordingly arisen for new methods of jointing and forming branch tees to this type of pipe, and foremost amongst these have been fusion techniques. A typical fusion technique is electrofusion, in which a coil of resistance wire is placed adjacent to the interface of two plastics material surfaces to be joined and an electric current passed therethrough to cause local fusion and thereby provide an extremely strong bond. Other electrofusion techniques involve Curie point heaters using induction heating as described in European Patent Application No. 0480053 and WO91/09247.

In a typical electrofusion method for making a service pipe connection to a "live" distribution main, there is used a tee piece, comprising an upstanding hollow member having a tubular threaded passage and a side pipe connected thereto, mounted on a saddle. The saddle is provided with an electrofusion coil on its undersurface, and by means of this coil the saddle is fused to the exterior surface of the distribution main. The side pipe is then connected to the consumer service pipe and the system pressure tested. A hole cutter, threadedly engaged in the upstanding hollow member, is then screwed down until it contacts the surface of the distribution main and cuts a hole therein. The cut portion of the distribution main, known as the "coupon" is retained within the cutter which is then screwed back and withdrawn to the upper end of the upstanding hollow member. This allows gas to pass along the tubular passage and through the side pipe to the subscriber. Finally, a cap is placed over the upper end of the upstanding hollow member to make a gas-tight seal.

This technique works well in practice but is somewhat expensive in that the cutter cannot be reused and it is necessary to provide the tubular passage of the upstanding hollow member with a screw-thread to enable the cutter to be screwed down into cutting contact with the wall of the distribution main, thereby increasing the manufacturing cost of the hollow member.

Various methods and devices for fitting a tee piece to a pipe are disclosed in GB546633, GB1228770 and GB2253022, the entire disclosures of which are incorporated herein by reference. However, in these devices it is necessary to provide a valve to close the device after the cutter is withdrawn and before any capping or plugging of the upstanding hollow member, to prevent the escape of gas.

In GB2141514, the entire disclosure of which is also incorporated herein by reference, there is described a branch fitting for plugging or closing a pipe which is provided with first and second barrel portions extending in the plane of the tubular axis of the pipe, the first barrel portion containing a cutter for forming an opening in the pipe and the second barrel portion containing a plugging or pig member and means for delivering it into the interior of the pipe through the formed opening. There is no mention in this specification of the problem of fitting a tee piece to a pipe.

We have now discovered an improved method of fitting a tee piece, for example, to a "live" gas distribution main which in preferred embodiments can avoid the need for a valve and for an internal thread on the tee piece, and can enable the cutter to be reused.

According to the present invention there is provided a method of fitting a tee piece formed from a plastics material and comprising an upstanding hollow member having a tubular passage and a side pipe connected thereto, to a fluid distribution main formed from a plastics material which comprises:
fusing a saddle having the tee piece mounted thereon to a wall of the distribution main,
connecting a hole cutting device to the upstanding hollow member of the tee piece, the hole cutting device comprising a hollow body member having a bifurcated internal bore, and having slidably mounted within the respective arms of the bifurcated internal bore a cutting means and a blocking means,
passing the cutting means through the upstanding hollow member and cutting a hole in the wall of the distribution main, withdrawing the cutting means into one of the arms of the bifurcated internal bore of the hole cutting device, passing the blocking means along the bifurcated internal bore until it is received in the upstanding hollow member and blocks the tubular passage thereof whilst leaving the side pipe connection to the distribution main open, and
removing the hole cutting device and, if necessary, capping the upstanding hollow member.

The plastics materials of the tee piece and the distribution main can be the same or different but are preferably the same, and preferably comprise an olefin polymer or copolymer, for example a polyolefin such as high density polyethylene.

Preferably the saddle is fused to the wall of the distribution main using an electrofusion technique as previously described. The electrofusion technique may involve the use of a resistance wire heating coil, or a Curie point heater which is activated by a high frequency current supplied by an electric induction device as described, for example, in European Patent Application No. 480053 and WO91/09247, the entire disclosures of which are incorporated herein by reference. Such Curie point heaters have the advantage that they autotherm at a predetermined temperature, thus avoiding the risk of overheating and degrading the polymer.

Electrofusion techniques can also be used for connecting the side pipe to a subscriber system, and for sealing or capping the blocking means in the upstanding hollow member when the hole cutting device is removed.

Preferably the cutting means is mounted on a screw-threaded stem which passes through a threaded bore in a cap which is fitted to a first arm of the bifurcated internal bore of the hollow body member. Preferably the hollow body member is mounted on the tee piece such that the first arm of the bifurcated internal bore and the upstanding hollow member of the tee piece are substantially coaxially aligned. After use, the cap together with the cutting means and stem can be separated from the hole cutting device, the "coupon" removed from the cutting means, and the parts then reconnected for reuse.

The blocking means preferably comprises a rubber plug which is carried on a stem passing through a cap fitted to a second arm of the bifurcated bore of the hollow body member. The second arm of the bifurcated bore is preferably aligned at a narrow angle to the first arm, most preferably from around 15 to 30°. After pushing the rubber plug into position in the tubular passage of the upstanding hollow member the stem can be withdrawn leaving the plug in place. For re-use, the cap is separated from the hole cutting device, a further rubber plug connected to the stem, and the parts reassembled.

In another aspect, the invention provides a hole cutting device suitable for use in the method of the invention which comprises a hollow body member having a bifurcated internal bore, and having slidably mounted within the respective arms of the bifurcated internal bore a cutting means and a blocking means, the hollow body member being adapted to be connected to an upstanding hollow member of a tee piece, such that the cutting means and the blocking means can be sequentially inserted into the upstanding hollow member.

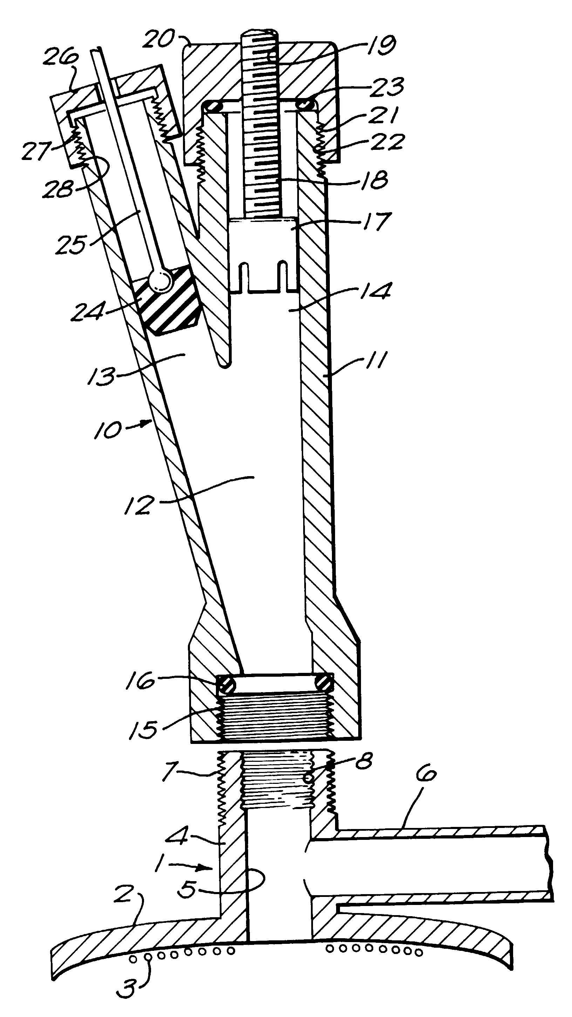

An example of a method according to the invention and an embodiment of a hole cutting device according to the invention will now be described with reference to and as illustrated in the accompanying Drawing which shows the device, together with a saddle carrying a tee piece in sectional side elevation.

Referring to the Drawing, the tee piece, illustrated generally at (1), is mounted on a saddle portion (2) provided with an electrofusion coil (3). The tee piece is centrally mounted on the saddle and comprises an upstanding hollow member (4) having a tubular passage (5) and, connected thereto, a side pipe (6). The upstanding hollow member has an external threaded section (7) for connection to the hole cutting device. Internal serrations (8) may be provided, if desired, to improve the retention of the blocking plug.

The hole cutting device illustrated generally at (10) comprises a hollow body (11) having a bifurcated internal bore (12) with arms (13) and (14). At the lower end of the bore is an internal threaded section (15) which cooperates with the threaded section (7) on the upstanding hollow member and is sealed by a sealing ring (16). A cutter (17) which is slidable within the bifurcated internal bore, is positioned within the arm (14). The cutter is mounted upon a threaded stem (18) which passes through a threaded bore (19) in a cap (20). The cap has screw threads (21) which cooperate with an externally threaded section (22) of the body (11). The cap is sealed by an O-ring (23).

Positioned in the arm (13), and slidably moveable in the bifurcated internal bore (12) is a rubber plug (24) which is loosely connected to a ball-ended stem (25) passing through a cap (26). The cap has threads (27) which cooperate with a threaded section (28) of the body (11).

In operation, the saddle is first fused to the external surface of the distribution main using the electrofusion coil (3). The hole cutting device (10) is then screwed onto the tee piece (1) and the cutter (17) screwed down by rotating the stem 18 until it passes through the bifurcated internal bore (12) and into the tubular passage (5). At the bottom of the tubular passage (5) the cutter (17) contacts the surface of the distribution main, and by further screw action cuts through the pipe wall, retaining a circular "coupon" of the pipe wall within the cutter. The cutter is then withdrawn through the tubular passage (5) and internal bore (12) until it is returned to the arm (14). The action of cutting the distribution main and withdrawing the "coupon" permits gas to enter the side pipe (6) into the subscriber's premises and also allows gas to fill the bifurcated internal bore (12). The plug (24) is then pushed by means of the ball-ended stem (25) through the bifurcated internal bore (12) and into the top of the upstanding hollow member (4) where it blocks the end of the tubular passage (5). The rubber plug (24) is pushed down only far enough to block the end of the passage (5) and not sufficiently to interfere with gas flow from the distribution main to the side pipe (6).

The ball-ended stem (25) is then disconnected from the rubber plug (24) allowing the hole cutting device (10) to be unscrewed from the tee piece (1). Finally a cap (not shown) is screwed to the upstanding hollow member (4) of the tee piece (1) thereby completing a gas-tight connection.

Various modifications may be made to the method and device of the invention, and such modifications are specifically included in the scope of the appended claims. Thus, for example, the rubber plug (24) may be replaced by a plug of a high MFR plastics material and the stem (25) may be connected to a rotary motor. In this embodiment, when the plug (24) is pushed into its blocking position in the upstanding hollow member (4), it is then rapidly spun by rotating the stem (25), the spinning motion creating friction and heat sufficient to weld the plug (24) to the internal bore of the tubular passage (5) of the upstanding member (4). In some circumstances this may obviate the need for a further cap on the tee-piece (1).

In a further embodiment, both the plug and the upstanding hollow member are formed from plastics material and either the plug or the upstanding hollow member of the tee piece are provided with an electrofusion heating element comprising a resistance coil or a Curie point heater as hereinbefore described, thus enabling the plug to be fused to the upstanding hollow member forming a gas tight seal without the use of screwed components such as a cap.

In a further embodiment, and further to reduce the inventory of components, the side pipe (6) may be connected to the subscriber service pipe by electrofusion, or by spin welding. For example, the side pipe (6) may be made slightly oversized and provided with a range of reducers for use with different subscriber service pipe sizes. Such a reducer may comprise a tubular sleeve which is fitted inside the side pipe (6) and is adapted to receive the subscriber service pipe inserted therein. The reducer may carry an electric resistance coil or Curie point heater or may have a projecting flange for connection to a rotary device for spin welding. By these means the reducer can be welded to the internal surface of the branch-off pipe (6) and the external surface of the subscriber service pipe thereby producing a gas tight joint.

Although the invention has been described with reference to the connection of a tee piece to a gas distribution main, it is not limited thereto, and it will be apparent that the invention can be applied to the connection of pipes carrying water, sewage, and other liquids.

## Claims

1. A method of fitting a tee piece (1) formed from a plastics material and comprising an upstanding hollow member (4) having a tubular passage (5) and a side pipe (6) connected thereto, to a fluid distribution main formed from a plastics material characterised in that it comprises:
fusing a saddle (2) having the tee piece (1) mounted thereon to a wall of the distribution main,
connecting a hole cutting device (10) to the upstanding hollow member (4) of the tee piece (1), the hole cutting device (10) comprising a hollow body member (11) have a bifurcated internal bore (12), and having slidably mounted within the respective arms of the bifurcated internal bore a cutting means (17) and a blocking means (24),
passing the cutting means (17) through the upstanding hollow member (4) and cutting a hole in the wall of the distribution main, withdrawing the cutting means (17) into one of the arms of the bifurcated internal bore of the hole cutting device (10), passing the blocking means (24) along the bifurcated internal bore until it is received in the upstanding hollow member (4) and blocks the tubular passage thereof whilst leaving the side pipe connection (6) to the distribution main open, and
removing the hole cutting device (10) and, if necessary, capping the upstanding hollow member.

2. A method according to claim 1, characterised in that the tee piece (1) is fused to a wall of the distribution main using an electrofusion technique.

3. A method according to any of the preceding claims, characterised in that the hollow member (4) is capped and the cap is sealed to the hollow member by an electrofusion technique.

4. A method according to claim 1 or 2, characterised in that the cutting means (17) is mounted on a screw-threaded stem (18) which passes through a threaded bore (19) in a cap (20) fitted to a first arm of the bifurcated internal bore of the hole cutting device and/or the blocking means (24) comprises a plug which is carried on a stem (25) passing through a cap (26) fitted to a second arm of the bifurcated internal bore of the hole cutting device.

5. A method according to any of claims 1 to 4, characterised in that the blocking means (24) comprises a plug and either the plug is formed of a high MFR plastics material which is carried on a stem (25) passing through a cap (26) fitted to a second arm of the bifurcated bore of the hole cutting device, and the plug when received in the upstanding hollow member is rapidly spun by rotating the stem, the spinning motion creating friction and heat sufficient to weld the plug to the internal bore of the tubular passage of the upstanding hollow member, or either the plug or the upstanding hollow member (4) of the tee piece is provided with an electrofusion heating element which is activated to fuse the plug to the upstanding hollow member.

6. A method according to any of the preceding claims, characterised in that the side pipe (6) is connected to the subscriber service pipe by electrofusion, or by spin welding.

7. A method according to claim 6, in which the side pipe is provided with a range of reducers for use with different subscriber pipe sizes.

8. A method according to claim 7, in which the reducer comprises a tubular sleeve which is fitted inside the side pipe and is adapted to receiver the subscriber service pipe inserted therein.

9. A method according to claim 7 or 8, characterised in that the reducer is provided with an electric resistance coil, a Curie point heater, or a projecting flange for connection to a rotary device for spin welding.

10. A hole cutting device (10) suitable for use in fitting a tee piece (1) to a fluid distribution main, whereby the hole cutting device comprises a hollow body member (11) having a bifurcated internal bore, and having slidably mounted within the respective arms of the bifurcated internal bore a cutting means (17) and a blocking means (24), the hollow body member being adapted to be attached to an upstanding hollow member (4) of the tee piece, such that the cutting means (17) and the blocking means (24) can be sequentially inserted into the upstanding hollow member (4).

## Patentansprüche

1. Verfahren zum Anschließen eines T-Stücks (1), das aus Kunststoff besteht und ein nach oben ragendes hohles Teil (4) mit einem rohrförmigen Durchlaß (5) und ein daran angeschlossenes Seitenrohr aufweist, an ein aus Kunststoff bestehendes FluidVerteilrohr, dadurch gekennzeichnet, daß das Verfahren folgende Schritte umfaßt:
Aufschmelzen eines Sattelstücks (2), auf dem das T-Stück (1) befestigt ist, auf eine Wand des Verteilrohres,
Anschließen eines Lochschneidegerätes (10) an das nach oben ragende hohle Teil (4) des T-Stückes (1), wobei das Lochschneidegerät (10) ein hohles Gehäuseteil (11) mit einer gegabelten Innenbohrung (12) und mit in den entsprechenden Armen der gegabelten Innenbohrung gleitend angeordneten Schneidmitteln (17) und Blockiermitteln (24) aufweist;
Führen der Schneidmittel (17) durch das nach oben ragende hohle Teil (4) und Einschneiden eines Loches in die Wand des Verteilrohres, sodann Zurückziehen der Schneidmittel (17) in einen der Arme der gegabelten Innenbohrung des Lochschneidegerätes (10), Führen der Blockiermittel (24) längs der gegabelten Innenbohrung, bis sie in dem nach oben ragenden hohlen Teil (4) aufgenommen sind und den rohrförmigen Durchlaß blockieren, wobei die Verbindung des Seitenrohres (6) mit dem Oberflächenrohr offen bleibt, und
Entfernen des Lochschneidegerätes (10) und, falls nötig, das nach oben ragende hohle Teil mit einer Kappe versehen.

2. Verfahren nach Anspruch 1, dadurch gekennzeichnet, daß das T-Stück (1) an eine Wand des Verteilrohres unter Anwendung einer Elektroschmelztechnik angeschmolzen wird.

3. Verfahren nach einem der vorhergehenden Ansprüche, dadurch gekennzeichnet, daß das hohle Teil (4) mit einer Kappe versehen und die Kappe mittels einer Elektroschmelztechnik an das hohle Teil angeschmolzen wird.

4. Verfahren nach Anspruch 1 oder 2, dadurch gekennzeichnet, daß die Schneidmittel (17) auf einem Schraubgewindeschaft (18) befestigt sind, der durch eine Gewindebohrung (19) in einer Kappe (20) hindurchläuft, die an einem ersten Arm der gegabelten Innenbohrung des Lochschneidegerätes befestigt ist, und/oder die Blockiermittel (24) einen Stöpsel umfassen, der von einem Schaft (25) getragen wird, welcher durch eine Kappe (26) hindurchläuft, die auf einem zweiten Arm der gegabelten Innenbohrung des Lochschneidegerätes befestigt ist.

5. Verfahren nach einem der Ansprüche 1 bis 4, dadurch gekennzeichnet, daß die Blockiermittel (24) einen Stöpsel aufweisen, und entweder der Stöpsel aus einem hochplastischen MFR-Werkstoff besteht, der von einem Schaft (25) getragen wird, welcher durch eine Kappe (26) hindurchläuft, die an einem zweiten Arm der gegabelten Bohrung des Lochschneidegerätes befestigt ist, und der Stöpsel dann, wenn er in dem nach oben ragenden hohlen Teil aufgenommen ist, sich schnell durch Drehen des Schaftes verdrehen läßt, wobei die Verdrehbewegung ausreichend Reibung und Hitze erzeugt, um den Stöpsel an der Innenbohrung des rohrförmigen Durchgangs des nach oben ragenden hohlen Teiles anzuschmelzen, oder daß der Stöpsel oder das nach oben ragende hohle Teil (4) des T-Stücks mit einem Elektroschmelz-Heizelement versehen ist, das aktiviert wird, um den Stöpsel mit dem nach oben ragenden hohlen Teil zu verschmelzen.

6. Verfahren nach einem der vorangehenden Ansprüche, dadurch gekennzeichnet, daß das Seitenrohr (6) durch Elektroschmelzen oder durch Reibungsschmelzen an dem Abnehmeranschlußrohr befestigt wird.

7. Verfahren nach Anspruch 6, bei dem das Seitenrohr mit einer Reihe von Übergangsstücken zur Benutzung mit unterschiedlichen Größen von Abnehmerrohren versehen ist.

8. Verfahren nach Anspruch 7, bei dem das Übergangsstück eine rohrförmige Buchse aufweist, die innerhalb des Seitenrohres befestigt und dazu eingerichtet ist, das dorthin eingeführte Abnehmeranschlußrohr aufzunehmen.

9. Verfahren nach Anspruch 7 oder 8, dadurch gekennzeichnet, daß das Übergangsstück mit einer elektrischen Widerstandsspule, einer Curie'sche-Punkt-Heizung oder mit einem vorstehenden Flansch zur Verbindung mit einem drehbaren Gerät für Reibungsschweißen versehen ist.

10. Lochschneidegerät (10), das zur Verwendung beim Anschluß eines T-Stückes (1) an ein Fluidverteilrohr geeignet ist, wobei das Lochschneidegerät ein hohles Gehäuseteil (11) mit einer gegabelten Innenbohrung aufweist und in ihm innerhalb der entsprechenden Arme der gegabelten Innenbohrung Schneidmittel (17) sowie Blockiermittel (24) verschiebbar angebracht sind, und wobei das hohle Gehäuseteil dazu eingerichtet ist, an einem nach oben ragenden hohlen Teil (4) des T-Stückes befestigt zu werden derart, daß die Schneidmittel (17) und die Blockiermittel (24) nacheinander in das nach oben ragende hohle Teil (4) eingeführt werden können.

## Revendications

1. Procédé de montage d'une pièce en T (1) formée d'une matière plastique et comprenant un organe (4) creux droit ayant un passage tubulaire (5) et un tuyau latéral (6) relié à celui-ci, sur une canalisation principale de distribution de fluide formée d'un matériau plastique caractérisé en ce qu'il comprend :
la fusion d'une semelle (2) ayant la pièce en T (1) montée dessus contre une paroi de la canalisation principale de distribution,
la liaison d'un dispositif (10) de découpe de trou à l'organe (4) creux droit de la pièce en T (1), le dispositif (10) de découpe de trou comprenant un organe à corps creux (11) ayant un perçage interne (12) à bifurcation, et ayant des moyens de découpe (17) et des moyens de blocage (24) montés de manière coulissante à l'intérieur des bras respectifs du perçage interne à bifurcation,
le passage des moyens de découpe (17) à travers l'organe (4) creux droit et la découpe d'un trou dans la paroi de la conduite de distribution principale, le retrait des moyens de découpe (17) dans l'un des bras du perçage interne à bifurcation du dispositif (10) de découpe de trou, le passage des moyens de blocage (24) le long du perçage interne à bifurcation jusqu'à ce qu'ils soient reçus dans l'organe (4) creux droit et bloquent le passage tubulaire de celui-ci tout en laissant la connexion (6) du tuyau latéral au tuyau de surface ouverte, et
le retrait du dispositif (10) de découpe de trou et, si nécessaire, la couverture de l'organe creux droit.

2. Procédé selon la revendication 1, caractérisé en ce que la pièce en T (1) est fondue contre une paroi de la canalisation principale de distribution en utilisant une technique d'électrofusion.

3. Procédé selon l'une quelconque des revendications précédentes, caractérisé en ce que l'organe creux (4) est couvert et le couvercle est scellé à l'organe creux par une technique d'électrofusion.

4. Procédé selon la revendication 1 ou 2, caractérisé en ce que les moyens de découpe (17) sont montés sur une tige (18) filetée qui passe à travers un trou fileté (19) dans le couvercle (20) monté sur un premier bras du perçage interne à bifurcation du dispositif de découpe de trou et/ou les moyens de blocage (24) comprennent un bouchon qui est porté sur une tige (25) passant à travers un couvercle (26) monté sur un second bras du perçage interne à bifurcation du dispositif de découpe de trou.

5. Procédé selon l'une quelconque des revendications 1 à 4, caractérisé en ce que les moyens de blocage (24) comprennent un bouchon et soit le bouchon est formé d'un matériau plastique à MFR élevé qui est porté sur une tige (25) passant à travers un couvercle (26) monté sur un second bras du perçage à bifurcation du dispositif de découpe de trou, et le bouchon, lorsque reçu dans l'organe creux droit, est rapidement animé d'un mouvement de rotation par la mise en rotation de la tige, le mouvement de rotation créant un frottement et suffisamment de chaleur pour souder le bouchon au perçage interne du passage tubulaire de l'organe creux droit, ou soit le bouchon ou l'organe (4) creux droit de la pièce en T est muni d'un élément de chauffage d'électrofusion qui est activé pour fondre le bouchon contre l'organe creux droit.

6. Procédé selon l'une quelconque des revendications précédentes, caractérisé en ce que le tuyau latéral (6) est relié au tuyau de service d'abonné par électrofusion ou par soudage par mise en rotation.

7. Procédé selon la revendication 6, dans lequel le tuyau latéral est muni d'une gamme de réducteurs pour l'utilisation avec différentes tailles de tuyau d'abonné.

8. Procédé selon la revendication 7, dans lequel le réducteur comprend un manchon tubulaire qui est monté à l'intérieur du tuyau latéral et est adapté pour recevoir le tuyau de service d'abonné inséré à l'intérieur de celui-ci.

9. Procédé selon la revendication 7 ou 8, caractérisé en ce que le réducteur est muni d'une bobine à résistance électrique, un dispositif de chauffage à point de Curie, ou un rebord saillant pour une connexion à un dispositif de mise en rotation pour un soudage par mise en rotation.

10. Dispositif (10) de découpe de trou adapté pour être utilisé dans le montage d'une pièce en T (1) sur une canalisation principale de distribution de fluide, dans lequel le dispositif de découpe de trou comprend un organe (11) à corps creux ayant un perçage interne à bifurcation et ayant des moyens de découpe (17) et des moyens de blocage (24) montés de manière coulissante à l'intérieur des bras respectifs du perçage interne à bifurcation, l'organe à corps creux étant adapté pour être fixé à un organe (4) creux droit de la pièce en T, de sorte que les moyens de découpe (17) et les moyens de blocage (24) peuvent être insérés séquentiellement dans l'organe (4) creux droit.
